# EUROPÄISCHE PATENTSCHRIFT

(11) **EP 4 028 313 B1**
(45) Veröffentlichungstag und Bekanntmachung des Hinweises auf die Patenterteilung: **08.02.2023**
(21) Anmeldenummer: 20771799.2
(22) Anmeldetag: 09.09.2020
(51) Int. Cl.: B62D 53/08, B60D 1/01, B60D 1/62, B62D 53/10

(54) **KUPPLUNGSSYSTEM**
COUPLING SYSTEM
SYSTÈME D'ATTELAGE

(30) Priorität: 10.09.2019 DE 102019124263
(43) Veröffentlichungstag der Anmeldung: 20.07.2022
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2020/075173
(87) Internationale Veröffentlichungsnummer: WO 2021/048189

(56) Entgegenhaltungen:
- DE-A1- 4 402 526
- DE-A1- 19 752 108
- DE-T2- 60 123 687
- DE-T2- 69 516 088

## Beschreibung

Die Erfindung betrifft ein Kupplungssystem, insbesondere mit einer Sattelkupplungsanordnung.

Sattelkupplungsanordnungen sind bereits aus dem Stand der Technik bekannt, diese dienen dazu, einen Königszapfen eines Anhängers aufnehmen zu können und Kräfte von einem Zugfahrzeug auf diesen Königszapfen übertragen zu können. Diese Sattelkupplungsanordnungen sind meist derart ausgestaltet, sodass die Sattelkupplungsplatte der Sattelkupplungsanordnung um eine Querachse relativ zum Zugfahrzeug schwenkbar ist. Der Lagewinkel der Sattelkupplungsplatte um die Querachse relativ zum Zugfahrzeug wird in den Fachkreisen auch als Nickwinkel bezeichnet. Die Kenntnis dieses Nickwinkels kann insbesondere Aufschluss über kritische Fahrsituationen geben. Um den Nickwinkel zu bestimmen, ist es allenfalls bekannt, sehr bauraumintensive und fehleranfällige Messsysteme zu verwenden.

Die DE 197 52 108 A1 betrifft ein Verfahren zur Erhöhung des Freigangs zwischen einer Sattelzugmaschine mit Luftfederung an der Forder- und Hinterachse oder mit Luftfederung nur an der Hinterachse und einem Auflieger mit Winkel - oder Näherungssensoren zwischen Sattelzugmaschine und Auflieger.

Die DE 695 16 088 T2 zeigt eine Überwachung des Bremsvorgangs eines zu einem Lastzug gehörenden Anhängers. Das Verfahren und die zugehörige Vorrichtung dienen dazu, die unterschiedlichen Bremswirkungen zwischen Zugfahrzeug und Anhänger auszugleichen, die insbesondere auch auf Alterung oder schlechte Wartung eines der Bremssysteme zurückzuführen sind.

Die DE 101 23 687 T2 zeigt ein elektronisches System zur Überwachung der Kupplung eines Aufliegers an einer Sattelauflieger-Kupplungsbaueinheit, die an einem Lastwagen-Fahrgestell angeordnet ist, und insbesondere ein elektronisches System, das angibt, ob der Auflieger richtig an die Sattelauflieger-Kupplungsbaueinheit gekuppelt ist. Dieses System zur Überwachung verfügt dabei über einen Neigungssensor, sowie eine Metallplatte.

Die DE 4402526 A1 zeigt eine Lagerung einer Kupplungsplatte einer Sattelkupplung, welche Messmittel aufweist, welche zum Beispiel als Dehnmessstreifen ausgebildet sind.

Es ist daher Aufgabe der Erfindung ein Kupplungssystem anzugeben, welches kompakt ist und in einfacherweise eine Messung des Nickwinkels der Sattelkupplungsplatte ermöglicht.

Diese Aufgabe wird mit einem Kupplungssystem gemäß dem Anspruch 1 und mit einem Nutzfahrzeug gemäß dem Anspruch 12 gelöst.

Erfindungsgemäß umfasst ein Kupplungssystem für ein Zugfahrzeug zumindest einen Sensor, erfindungsgemäß eine Vielzahl von Sensoren, und eine Sattelkupplungsanordnung, wobei die Sattelkupplungsanordnung eine Sattelkupplungsplatte und zumindest eine Lagerung, welche insbesondere ein Lagerbock ist, aufweist, wobei die Sattelkupplungsplatte eine Aufliegerfläche und eine Einfahröffnung aufweist, wobei die Aufliegerfläche eine nach außen weisende Normale aufweist, wobei die Einfahröffnung sich in einer Einfahrrichtung erstreckt, wobei die Sattelkupplungsplatte um eine Querachse relativ zu der Lagerung schwenkbar gelagert ist, wobei die Lagerung eine Aufstandsfläche aufweist, wobei die Aufstandsfläche in einer Aufstandsebene liegt, wobei der Sensor mittel- und/oder unmittelbar einen Nickwinkel um die Querachse berührungslos erfasst, und wobei der Sensor in unmittelbarer Nähe zur Sattelkupplungsplatte angeordnet ist. Das erfindungsgemäße Kupplungssystem dient dazu, an einem Zugfahrzeug angeordnet zu sein. Das Kupplungssystem umfasst eine Vielzahl von Sensoren wobei diese Sensoren berührungslos arbeiten Ein berührungsloser Sensor zeichnet sich insbesondere dadurch aus, dass der Sensor ohne einen Kontakt mit einer Gegenfläche bzw. einer Messfläche in der Lage ist, einen Messwert zu erfassen. Beispielsweise sind Kameras, Laser oder Ultraschallsensoren berührungslose Sensorarten im Sinne der Erfindung, welche in dem erfindungsgemäßen Kupplungssystem angeordnet werden können. Neben dem berührungslosen Sensor umfasst das Kupplungssystem auch eine Sattelkupplungsanordnung, welche zumindest eine Sattelkupplungsplatte und einen Lagerbock bzw. eine Lagerung aufweist. Die Sattelkupplungsplatte weist zumindest eine Aufliegerfläche und eine Einfahröffnung auf. Die Aufliegerfläche der Sattelkupplungsplatte dient dazu, in einem eingekuppelten Zustand einen Sattelauflieger abzustützen. In anderen Worten kann die Aufliegerfläche diejenige Fläche der Sattelkupplungsplatte sein, auf welcher der Sattelauflieger in dem eingekuppelten Zustand aufliegt. Diese Aufliegerfläche weist dabei eine nach außen weisende Normale auf. Eine Normale ist dann nach außen weisend, wenn sie von der maßgeblichen Fläche weg weist. Auf Grund dessen, dass die Aufliegerfläche nicht unbedingt komplett eben ausgestaltet sein muss, ist die maßgebliche nach außen weisende Normale der Aufliegerfläche die gemittelte Normale über die gesamte Aufliegerfläche. Insbesondere ist diese nach außen weisende Normale der Aufliegerfläche in einem eingebauten Zustand bzw. in dem eingekuppelten Zustand derart ausgerichtet, dass diese bei einer Fahrt über einen idealen ebenen Untergrund entgegen dem Vektor der Erdbeschleunigung gerichtet ist. In anderen Worten kann die Aufliegerfläche insbesondere bei einer idealen Fahrt parallel zur horizontalen Ebene ausgerichtet sein. Die Sattelkupplungsplatte verfügt neben der Aufliegerfläche auch über eine Einfahröffnung. Diese Einfahröffnung dient dazu, dass in diese ein Königszapfen einführbar ist, um so ein Einkuppeln eines Aufliegers bzw. eines Sattelaufliegers in die Sattelkupplungsplatte bzw. die Sattelkupplungsanordnung zu erreichen bzw. zu ermöglichen. Die Einfahröffnung erstreckt sich in Richtung der Einfahrrichtung. Die Einfahrrichtung ist insbesondere diejenige Richtung, in welche sich der Königszapfen des Sattelaufliegers bewegen muss, um von einem nicht eingekuppelten Zustand in den eingekuppelten Zustand überführt werden zu können. Alternativ oder zusätzlich bevorzugt kann die Einfahrrichtung auch diejenige Richtung sein, in welche sich die Sattelkupplungsanordnung bei einer idealen Geradeausfahrt bewegt. Der eingekuppelte Zustand ist insbesondere derjenige Zustand, bei dem der Königszapfen des Sattelaufliegers in Relation zur Sattelkupplungsplatte seine endgültige Position eingenommen hat. In dieser endgültigen Position sind insbesondere Zug- und Querkräfte von der Sattelkupplungsanordnung auf den Königszapfen übertragbar. Der eingekuppelte Zustand ist derjenige Zustand, in welchem der Sattelauflieger mit dem Zugfahrzeug über die Sattelkupplungsanordnung derart verkuppelt ist, sodass Zug- und Querkräfte zwischen dem Anhänger und dem Zugfahrzeug übertragbar sind. Die Sattelkupplungsplatte der Sattelkupplungsanordnung ist derart gelagert, dass diese schwenkbar um die Querachse relativ zum Lagerbock bzw. zur Lagerung ist. Die Querachse ist insbesondere diejenige Achse, welche senkrecht auf der Einfahrrichtung und der nach außen weisenden Normalen der Aufliegerfläche steht. Der Lagerbock bzw. die Lagerung der Sattelkupplungsanordnung dient dazu, die Sattelkupplungsanordnung gegenüber einer Aufstandsebene abzustützen. Hierzu verfügt der Lagerbock bzw. die Lagerung über zumindest eine Aufstandsfläche. Diese Aufstandsfläche ist derart angeordnet bzw. orientiert, dass diese in der Aufstandsebene liegt. Durch das schwenkbare Lagern der Sattelkupplungsplatte um die Querrichtung gegenüber dem Lagerbock bzw. gegenüber der Lagerung wird erreicht, dass insbesondere bei einer unebenen Fahrbahn eine gewisse Schwenkbewegung zwischen dem Zugfahrzeug und dem zu ziehenden Sattelauflieger möglich ist. Die Verdrehung bzw. die Position der Schwenkbewegung bzw. der Rotationsbewegung der Sattelkupplungsplatte um die Querachse wird dabei als Nickwinkel bezeichnet. Der berührungslos arbeitende Sensor des Kupplungssystems ist derart konfiguriert, dass dieser mittelbar und/oder unmittelbar diesen Nickwinkel um die Querachse berührungslos erfassen kann. Erfindungsgemäß wird die Distanz der Aufliegerfläche und/oder die Änderung dieser Distanz gegenüber der Aufstandsebene gemessen. Bevorzugt kann beispielsweise eine solche Messung auch dadurch erfolgen, dass der Sensor mit einem Polrad interagiert, so dass hierdurch ebenfalls der Nickwinkel um die Querachse messtechnisch erfasst werden kann. Um eine besonders kompakte, leicht zu montierende und einfache Messmethodik für den Nickwinkel zu erreichen, ist der Sensor des erfindungsgemäßen Kupplungssystems in unmittelbarer Nähe zur Sattelkupplungsplatte angeordnet. Unter der Begrifflichkeit "in unmittelbarer Nähe zur Sattelkupplungsplatte angeordnet" ist in diesem Zusammenhang zu verstehen, dass der zumindest eine Sensor, bevorzugt alle Sensoren, des Kupplungssystems zur berührungslosen Erfassung des Nickwinkels maximal 0,5 m, bevorzugt maximal 0,3 m, und besonders stark bevorzugt maximal 0,2 m, von der Sattelkupplungsplatte beabstandet angeordnet sind. In diesem Zusammenhang sei jedoch darauf hingewiesen, dass für die Bestimmung, ob ein Sensor "in unmittelbarer Nähe zur Sattelkupplungsplatte angeordnet" ist oder nicht, nur die Sensoren des Kupplungssystems maßgeblich sind, welche eine berührungslose Messung des Nickwinkels ausführen bzw. dazu bestimmt sind, auszuführen.

Vorteilhafterweise umfasst das Kupplungssystem eine Vielzahl von Sensoren, wobei die Vielzahl von Sensoren mittel und/oder unmittelbar einen Nickwinkel um die Querachse berührungslos erfassen und/oder bestimmen. Durch die Vielzahl von Sensoren kann eine hohe Redundanz und/oder eine Steigerung der Messgenauigkeit des Nickwinkels erreicht werden. Vorteilhafterweise ist daher der Messwert jedes einzelnen Sensors in der Lage, für sich alleine den Nickwinkel zu bestimmen bzw. anzugeben. In anderen Worten kann daher das Kupplungssystem eine Vielzahl von Nickwinkelsensoren aufweisen. Alternativ oder zusätzlich bevorzugt können auch einige Sensoren nur in Zusammenschau mit anderen Sensoren den Nickwinkel bestimmen bzw. angeben.

Bevorzugt ist zumindest ein Sensor an und/oder auf der Lagerung, insbesondere auf dem Lagerbock, angeordnet und/oder befestigt, und/oder wobei zumindest ein Sensor an der Sattelkupplungsplatte angeordnet und/oder befestigt ist. In anderen Worten ist bevorzugt zumindest ein Sensor direkt mit der Sattelkupplungsplatte oder mit dem Lagerbock bzw. der Lagerung mechanisch fest verbunden. Ein Sensor ist insbesondere dann an dem Lagerbock bzw. der Lagerung oder der Sattelkupplungsplatte angeordnet und/oder befestigt, wenn der Sensor dabei sämtliche Bewegungen mit der Sattelkupplungsplatte bzw. mit dem Lagerbock bzw. der Lagerung bei einer Drehung und/oder Bewegung desjeweiligen Bauteils mitvollführt. Dies kann beispielsweise bedeuten, dass, wenn der maßgebliche Sensor an der Sattelkupplungsplatte angeordnet und/oder befestigt ist, dieser Sensor jegliche Nick- oder Translationsbewegung mit der Sattelkupplungsplatte mitmacht. Durch das Anordnen des Sensors am Lagerbock bzw. an der Lagerung kann eine besonders einfache Kabelführung und Energieversorgung des Sensors erfolgen, so dass hierdurch Kosten gespart werden können. Durch eine Anordnung des Sensors an der Sattelkupplungsplatte kann insbesondere erreicht werden, dass der Sensor gegenüber äußeren Einflüssen geschützt ist. Dies gilt in besonders hohem Maße dann, wenn der Sensor an einer Fläche der Sattelkupplungsplatte angeordnet ist, die der Aufliegerfläche in Richtung der nach außen weisenden Normalen der Aufliegerfläche gegenüberliegend ausgebildet ist.

Vorteilhafterweise ist zumindest ein Sensor auf der Querachse angeordnet, und/oder, wobei zumindest ein Sensor derart angeordnet ist, dass dieser von der Querachse geschnitten ist, wobei der Sensor insbesondere ein Winkelsensor ist. Durch die Anordnung des Sensors auf der Querachse bzw. derart, dass der Sensor von der Querachse geschnitten wird, resultiert eine besonders kompakte Messanordnung. Darüber hinaus kann hierdurch auch noch eine direkte und unmittelbare Messung des Nickwinkels erfolgen, sodass eine besonders zuverlässige Messung resultiert. Unter einem "Schneiden des Sensors von der Querachse" ist in diesem Zusammenhang zu verstehen, dass der Sensor derart angeordnet ist, dass zumindest ein Teil des Volumens, welches von dem Sensor eingenommen ist, von der Querachse tangiert und/oder von der Querachse - in dessen gedachten Verlauf - durchstoßen wird. Diesbezüglich sei jedoch angemerkt, dass für das Durchstoßen bzw. für die Tangierung insbesondere der gedachte Verlauf der Querachse bereits maßgeblich ist. Der Sensor kann dabei derart ausgebildet sein, dass dieser ein Winkelsensor ist, so dass der Sensor unmittelbar den Nickwinkel bestimmen kann.

Vorteilhafterweise ist zumindest ein Sensor ein induktiver und/oder kapazitiver Sensor. Durch das Verwenden eines induktiven oder kapazitiven Sensors ist die Messung des Nickwinkels besonders verschmutzungsunabhängig, denn sowohl kapazitive als auch induktive Sensoren reagieren auf Verschmutzungen besonders unempfindlich. Besonders bevorzugt sind dabei alle Sensoren, welche zur Messung des Nickwinkels verwendet werden, induktive und/oder kapazitive Sensoren.

Besonders bevorzugt ist es, wenn alle Sensoren des Nickwinkelmesssystems zueinander austauschbar sind. Dies kann beispielsweise dadurch erreicht werden, dass alle Sensoren des Kupplungssystems gleich ausgestaltet sind. Hierdurch kann insbesondere die Wartbarkeit des Systems erhöht werden, da keine Vielzahl von verschiedenen Sensoren vorgehalten werden müssen.

Bevorzugt bildet zumindest ein Sensor ein Messsystem mit einem Polrad, wobei das Polrad rotationsstarr um die Querachse gegenüber der Sattelkupplungsplatte und/oder gegenüber der Lagerung, insbesondere gegenüber dem Lagerbock, ist. In anderen Worten kann zumindest ein Sensor des Kupplungssystems mit einem Polrad ein Messsystem bilden, welches ähnlich wie ein ABS-System bei einer Bremse ausgebildet ist. Hierzu ist das Polrad insbesondere mit der Sattelkupplungsplatte oder dem Lagerbock bzw. der Lagerung drehfest verbunden, wobei gleichzeitig der Sensor auf dem anderen Bauteil (Lagerung bzw. Lagerbock oder Sattelkupplungsplatte) angeordnet sein kann, so dass in einfacher Weise die Relativbewegung zwischen Sensor und Polrad um die Querachse detektiert werden kann. Hierdurch entsteht ein besonders zuverlässiger Winkelmesssensor bzw. ein besonders zuverlässiges Winkelmesssystem. Vorteilhafterweise ist der Sensor und/oder ist das Polrad derart angeordnet, dass diese in Richtung der Querachse zumindest ein distales Ende der Sattelkupplungsanordnung bzw. des Kupplungssystems ausbilden. In anderen Worten kann dies bedeuten, dass das Polrad und/oder der Sensor in Richtung der Querachse ganz außen angeordnet sind. Hierdurch kann insbesondere die Wartbarkeit erhöht werden und/oder der Montageaufwand reduziert werden.

Erfindungsgemäß bestimmt zumindest ein Sensor einen Abstand der Aufliegerfläche zu der Aufstandsebene in Richtung einer Normalen der Aufstandsebene. Die maßgebliche Normale der Aufstandsebene ist diejenige Normale der Aufstandsebene, welche in Richtung der Sattelkupplungsplatte weist. Beispielsweise kann diese Normale dabei parallel zu der nach außen weisenden Normalen der Aufliegerfläche der Sattelkupplungsplatte sein, insbesondere wenn der Nickwinkel um die Querachse 0° beträgt. Durch das Bestimmen des Abstands der Aufliegerfläche zu der Aufstandsebene kann - unter Kenntnis des Abstands des Sensors zur Querachse, insbesondere in Einfahrrichtung - leicht der Nickwinkel indirekt bestimmt werden. In diesem Zusammenhang sei jedoch darauf hingewiesen, dass diese Abstandsbestimmung zwischen der Aufliegerfläche und der Aufstandsebene nicht unmittelbar direkt erfolgen muss. Vielmehr kann diese Messung auch indirekt erfolgen. Dies ist beispielsweise dann der Fall, wenn der Sensor und die verwendete Messfläche einen definierten und bekannten Abstand zu der Aufliegerfläche bzw. zu der Aufstandsebene aufweisen. In anderen Worten kann diese Abstandsmessung in Richtung der Normalen der Aufstandsebene indirekt dadurch erfolgen, dass der Abstand zwischen einer Fläche der Sattelkupplungsplatte und einer Fläche des Lagerbocks bzw. der Lagerung bestimmt wird, wobei jeweils der Abstand dieser Flächen zu der Aufliegerfläche bzw. zu der Aufstandsebene bekannt sind. Beispielsweise kann dabei ein Sensor auf dem Lagerbock angeordnet sein, welcher messtechnisch mit einer Messfläche der Sattelkupplungsplatte interagiert, wobei die Messfläche insbesondere unterhalb der Aufliegerfläche angeordnet ist und wobei der Abstand des Sensors zur Aufstandsebene und der Abstand der Messfläche zur Aufliegerfläche jeweils bekannt sind. Vorteilhafterweise ist der für die Abstandsbestimmung maßgebliche Sensor derart angeordnet, dass dieser den Abstand in eine Messrichtung misst, welche im Wesentlichen parallel zur nach außen weisenden Normalen der Aufstandsfläche ist. Im Wesentlichen parallel zur Normalen der Aufstandsebene ist eine Messrichtung insbesondere dann, wenn der zwischen der Normalen und der Messrichtung gebildete maximale Winkel, dem maximal möglichen Nickwinkel der Sattelkupplungsplatte um die Querachse entspricht. Vorteilhafterweise ist die Messrichtung des Sensors dabei derart orientiert, dass diese parallel zur Normalen der Aufstandsebene oder parallel zur nach außen weisenden Normalen der Aufliegerfläche orientiert ist - unabhängig von der Größe des Nickwinkels. Hierdurch kann eine besonders messfehlerarme Bestimmung des Nickwinkels erfolgen. Es versteht sich in diesem Zusammenhang, dass auch eine Vielzahl von Sensoren in dem Kupplungssystem vorhanden sein können, welche unabhängig voneinander den Abstand zwischen der Aufstandsebene und der Aufliegerfläche messtechnisch erfassen können. Hierdurch wird insbesondere die Redundanz der Messung erhöht.

In einer vorteilhaften Weiterbildung bestimmen zumindest zwei Sensoren einen Abstand der Aufliegerfläche zu der Aufstandsebene in Richtung der Normalen der Aufstandsebene, wobei bevorzugt ein Sensor in Einfahrrichtung vor und der andere Sensor in Einfahrrichtung hinter der Querachse angeordnet sind. Durch das Verwenden von zumindest zwei Sensoren zur Abstandsmessung kann erreicht werden, dass eine besonders sichere Nickwinkelmessung erfolgen kann. Durch das Anordnen eines Sensors vor der Querachse und eines Sensors hinter der Querachse - in Richtung der Einfahrrichtung - kann erreicht werden, dass durch ein Vergleich dieser beiden Sensoren die Richtung der Nickbewegung (positive Nickbewegung oder negative Nickbewegung) besonders einfach und zuverlässig festgestellt werden kann. Diese Identifikation der Vorzeichenrichtung kann insbesondere als weiteres Redundanzkriterium der Messung herangezogen werden, so dass durch diese Art der Anordnung der Messsensoren die Messgenauigkeit bzw. die Zuverlässigkeit der Messung erhöht werden kann.

In einer bevorzugten Ausführungsform weisen die zumindest zwei Sensoren den gleichen Abstand zu der Querachse in Richtung der Einfahrrichtung auf. In anderen Worten kann dies bedeuten, dass die Sensoren in Einfahrrichtung den gleichen Abstand zur Querachse aufweisen. Durch diese Gleich-Beabstandung der Sensoren kann erreicht werden, dass durch die Betrachtung der Differenzen leicht und effektiv Messfehler festgestellt werden können.

Vorteilhafterweise bestimmt ein Sensor einen Abstand der Aufliegerfläche zu der Aufstandsebene in Richtung der Normalen der Aufstandsebene, wobei der Sensor hierfür mit einer Messfläche der Sattelkupplungsplatte messtechnisch interagiert, wobei diese Messfläche der Aufliegerfläche gegenüberliegend ausgebildet ist. In anderen Worten kann dies bedeuten, dass der Sensor zur Abstandsbestimmung messtechnisch mit einer Messfläche der Sattelkupplungsplatte interagiert, welche unterhalb der Aufliegerfläche angeordnet ist. Diese Messfläche kann daher derart ausgebildet sein, dass diese eine nach außen weisende Normale aufweist, welche in Richtung der Aufstandsebene zeigt. Durch das Ausbilden einer Messfläche unterhalb der Aufliegerfläche kann erreicht werden, dass diese Messfläche besonders gegen Verschmutzung und/oder mechanische Beeinflussung geschützt ist. Alternativ oder zusätzlich bevorzugt kann das Messsystem auch derart ausgebildet sein, dass der Messsensor an einer Fläche der Sattelkupplungsplatte angeordnet ist, welche der Aufliegerfläche gegenüberliegend ausgebildet ist, wobei die Messfläche, mit welcher der Sensor interagiert, auf dem Lagerbock bzw. der Lagerung angeordnet ist oder einen Teil des Lagerbocks bzw. der Lagerung ausbildet. Hierdurch kann der Sensor insbesondere gegenüber mechanischen Beeinflussungen und/oder verschmutzungssicher angebracht werden.

Vorteilhafterweise ist die Sattelkupplungsplatte, insbesondere in Richtung der Normalen der Aufstandsebene und/oder der Querrichtung und/oder der Normalen der Aufliegerfläche, unverschieblich zu der Lagerung, insbesondere zu dem Lagerbock. Hierdurch kann eine besonders sichere Abstützung der Sattelkupplungsplatte erreicht werden. Unter einem "unverschieblich" ist dabei eine Verhinderung einer translatorischen Bewegung zu verstehen, sodass weiterhin eine rotatorische Bewegung möglich ist oder sein kann.

Ein weiterer Aspekt der Erfindung kann ein Nutzfahrzeug betreffen, welches ein Kupplungssystem wie oben beschrieben aufweist.

Weitere Vorteile und Merkmale der vorliegenden Erfindung ergeben sich aus der nachfolgenden Beschreibung in Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
Figur 1 eine Schnittansicht durch ein Kupplungssystem;
Figur 2 eine Rückansicht eines Kupplungssystems und
Figur 3 eine Draufsicht eines Kupplungssystems.

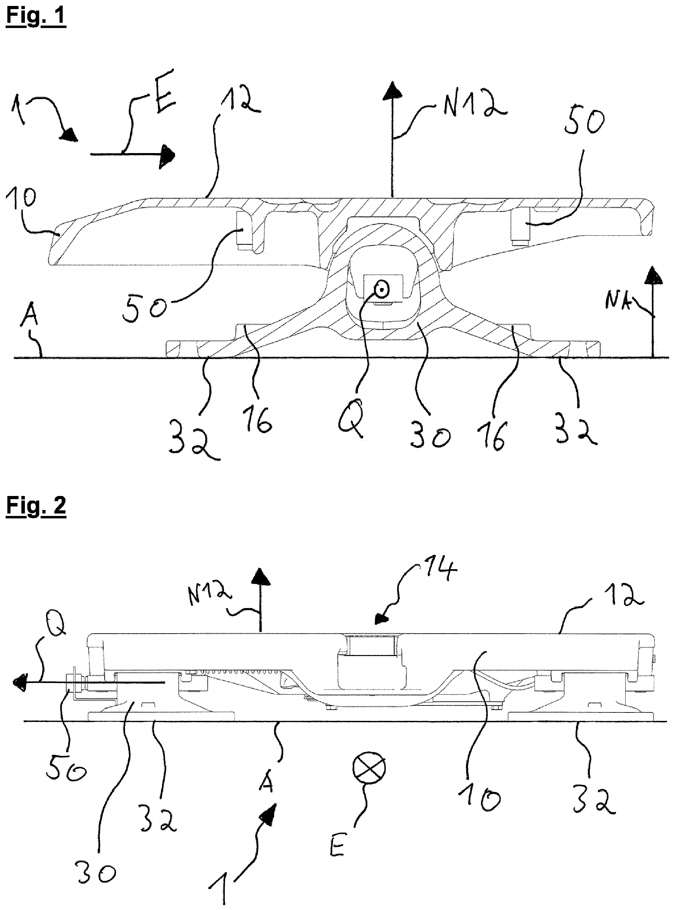

In der **Fig. 1** ist ein Kupplungssystem 1 gezeigt, welches eine Sattelkupplungsplatte 10 und einen Lagerbock 30 sowie zumindest einen Sensor 50 umfasst. Die Sattelkupplungsplatte 10 ist dabei um die Querachse Q gegenüber dem Lagerbock 30 gelagert. Der Lagerbock 30 verfügt über zwei Aufstandsflächen 32, welche in der Aufstandsebene A liegen. Der Lagerbock 30 weist zwei Messflächen 16 auf, welche jeweils in Einfahrrichtung E vor bzw. hinter der Querachse Q angeordnet sind. Diese Messflächen 16 weisen dabei eine nach außen weisende Normale auf, welche parallel zu der Normalen der Aufstandsebene NA und/oder zu der nach außen weisenden Normalen N12 der Aufliegerfläche 12 sind. Mit diesen Messflächen 16 interagiert jeweils messtechnisch ein Sensor 50. Die Messsensoren 50 sind in der dargestellten Ausführungsform derart angeordnet, dass diese an einer gegenüberliegend zu der Aufliegerfläche 12 befindlichen Fläche der Sattelkupplungsplatte 10 angeordnet sind. Alternativ oder zusätzlich bevorzugt, können diese Messsysteme (Sensor 50 und der Messfläche 16) auch derart ausgebildet sein, dass der Sensor 50 des Messsystems am Lagerbock 30 angeordnet ist und die Messfläche 16 eine Fläche der Sattelkupplungsplatte 10 ist. In anderen Worten kann zumindest eines der Messsysteme daher derart ausgebildet sein, dass der Sensor 50 und die Messfläche 16 zu der in der Figur dargestellten Ausführungsform vertauscht sind. Die Aufliegerfläche 12 der Sattelkupplungsplatte 10 weist eine nach außen weisende Normale N12 auf. Bei der Idealposition, bei der der Nickwinkel um die Querachse Q beispielsweise 0° beträgt, wie es in der Figur 1 dargestellt ist, ist die nach außen weisende Normale N12 der Aufliegerfläche 12 parallel zu der Normalen NA der Aufstandsebene A ausgerichtet. Diese beiden Normalen stehen bei der Idealposition senkrecht zu der Einfahrrichtung E und senkrecht zu der Querachse Q. Insbesondere können die nach außen weisende Normale N12 der Aufliegerfläche 12, die Einfahrrichtung E und die Querachse Q ein rechtshändiges Koordinatensystem bilden (nicht nur bei der Idealposition).

In der **Fig. 2** ist eine Rückansicht in Richtung der Einfahrrichtung E des Kupplungssystems 1 gezeigt. Die Sattelkupplungsplatte 10 weist dabei eine Aufliegerfläche 12 auf sowie eine Einfahröffnung 14, wobei diese Einfahröffnung 14 sich in Richtung der Einfahrrichtung E erstreckt. Die Sattelkupplungsplatte 10 ist über den Lagerbock 30 schwenkbar um die Querachse Q gegenüber der Aufstandsebene A gelagert. Um den Nickwinkel um die Querachse Q berührungslos erfassen zu können, verfügt das Kupplungssystem 1 über einen Winkelsensor 50, welcher derart angeordnet ist, dass dieser von der Querachse Q geschnitten ist.

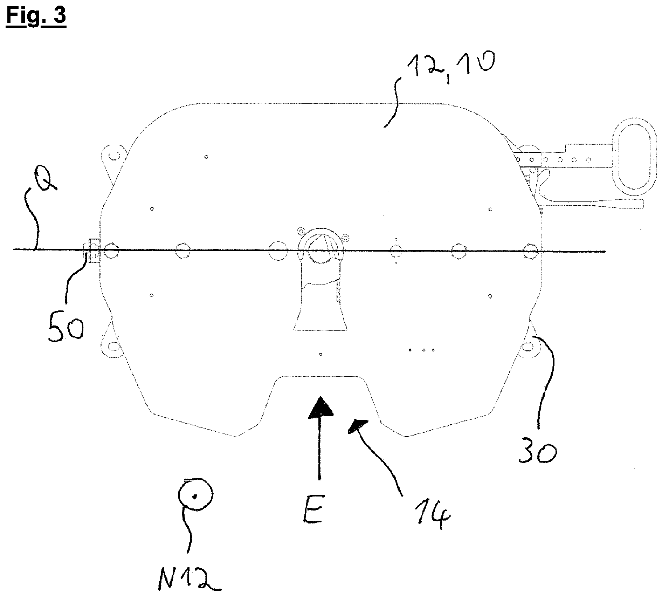

In der **Fig. 3** ist eine weitere Ausgestaltung des erfindungsgemäßen Kupplungssystems 1 gezeigt. In der Figur 3 ist dabei eine Ansicht entgegen der nach außen weisenden Normalen N12 der Aufliegerfläche 12 gezeigt. Die Sattelkupplungsplatte 10 verfügt dabei über eine Einfahröffnung 14, welche zwischen den beiden Sattelkupplungshörnern der Sattelkupplungsplatte 10 gebildet ist und sich in die Einfahrrichtung E erstreckt. Die Sattelkupplungsplatte 10 verfügt dabei über eine Aufliegerfläche 12, welche in einem eingekuppelten Zustand dazu dient, einen Sattelauflieger abzustützen. Die Sattelkupplungsplatte 10 ist dabei schwenkbar um die Querachse Q gegenüber dem Lagerbock 30 mittel- oder unmittelbar gelagert. Die Lagerböcke 30 des Kupplungssystems 1 sind dabei in der dargestellten Ausführungsform die einzigen abstützenden Elemente des Kupplungssystems 1. Um den Nickwinkel um die Querachse Q ermitteln zu können, verfügt das in der Fig. 3 dargestellte Kupplungssystem 1 über einen Sensor 50, welcher als ein Winkelsensor ausgebildet ist.

### Bezugszeichenliste:

- 1: - Kupplungssystem
- 10: - Sattelkupplungsplatte
- 12: - Aufliegerfläche
- 14: - Einfahröffnung
- 16: - Messfläche
- 30: - Lagerbock
- 32: - Aufstandsfläche
- 50: - Sensor
- A: - Aufstandsebene
- E: - Einfahrrichtung
- N12: - nach außen weisende Normale der Aufliegerfläche
- NA: - Normale der Aufstandsebene
- Q: - Querachse

## Patentansprüche

1. Kupplungssystem (1) für ein Zugfahrzeug, umfassend eine Vielzahl von Sensoren (50), und eine Sattelkupplungsanordnung,
wobei die Sattelkupplungsanordnung eine Sattelkupplungsplatte (10) und zumindest eine Lagerung, welche insbesondere ein Lagerbock (30) ist, aufweist,
wobei die Sattelkupplungsplatte (10) eine Aufliegerfläche (12) und eine Einfahröffnung (14) aufweist,
wobei die Aufliegerfläche (12) eine nach außen weisende Normale (N12) aufweist,
wobei die Einfahröffnung (14) sich in eine Einfahrrichtung (E) erstreckt,
wobei die Sattelkupplungsplatte (10) um eine Querachse (Q) relativ zur Lagerung schwenkbar gelagert ist,
wobei die Lagerung eine Aufstandsfläche (32) aufweist,
wobei die Aufstandsfläche (32) in einer Aufstandsebene (A) liegt,
wobei die Vielzahl von Sensoren (50) mittel- und/oder unmittelbar einen Nickwinkel um die Querachse (Q) berührungslos erfassen und/oder bestimmen, und
wobei zumindest einer der Vielzahl von Sensoren (50) in unmittelbarer Nähe zur Sattelkupplungsplatte (10) angeordnet ist,
**dadurch gekennzeichnet, dass** zumindest ein Sensor (50) einen Abstand der Aufliegerfläche (12) zu der Aufstandsebene (A) in Richtung einer Normalen (NA) der Aufstandsebene bestimmt.

2. Kupplungssystem (1) gemäß Anspruch 1,
wobei zumindest ein Sensor (50) an und/oder auf der Lagerung, insbesondere auf dem Lagerbock (30), angeordnet und/oder befestigt ist.

3. Kupplungssystem (1) gemäß einem der vorhergehenden Ansprüche,
wobei zumindest ein Sensor (50) an der Sattelkupplungsplatte (10) angeordnet und/oder befestigt ist.

4. Kupplungssystem (1) gemäß einem der vorhergehenden Ansprüche,
wobei zumindest ein Sensor (50) auf der Querachse (Q) angeordnet ist, und/oder
wobei zumindest ein Sensor (50) derart angeordnet ist, dass dieser von der Querachse (Q) geschnitten ist,
wobei der Sensor (50) insbesondere ein Winkelsensor ist.

5. Kupplungssystem (1) gemäß einem der vorhergehenden Ansprüche,
wobei zumindest ein Sensor (50) ein induktiver und/oder kapazitiver Sensor (50) ist.

6. Kupplungssystem (1) gemäß einem der vorhergehenden Ansprüche,
wobei alle Sensoren (50) des Nickwinkelmesssystems zueinander austauschbar sind.

7. Kupplungssystem (1) gemäß einem der vorhergehenden Ansprüche,
wobei zumindest ein Sensor (50) ein Messsystem mit einem Polrad bildet,
wobei das Polrad rotationsstarr um die Querachse (Q) gegenüber der Sattelkupplungsplatte (10) und/oder gegenüber der Lagerung, insbesondere gegenüber dem Lagerbock (30), ist.

8. Kupplungssystem (1) gemäß einem der vorhergehenden Ansprüche,
wobei zumindest zwei Sensoren (50) einen Abstand der Aufliegerfläche (12) zu der Aufstandsebene (A) in Richtung einer Normalen (NA) der Aufstandsebene bestimmten,
wobei bevorzugt ein Sensor (50) in Einfahrrichtung (E) vor und der andere Sensor (50) in Einfahrrichtung (E) hinter der Querachse (Q) angeordnet sind.

9. Kupplungssystem gemäß einem der vorhergehenden Ansprüche,
wobei die zumindest zwei Sensoren (50) den gleichen Abstand zu der Querachse (Q) in Richtung der Einfahrrichtung (E) aufweisen.

10. Kupplungssystem gemäß einem der vorhergehenden Ansprüche,
wobei ein Sensor (50) einen Abstand der Aufliegerfläche (12) zu der Aufstandsebene (A) in Richtung der Normalen (NA) der Aufstandsebene bestimmt,
wobei der Sensor (50) hierfür mit einer Messfläche (16) der Sattelkupplungsplatte (10) messtechnisch interagiert,
wobei die Messfläche (16) der Aufliegerfläche (12) gegenüberliegend ausgebildet ist.

11. Kupplungssystem gemäß einem der vorhergehenden Ansprüche,
wobei die Sattelkupplungsplatte (10), insbesondere in Richtung der Normalen (NA) der Aufstandsebene und/oder der Querrichtung (Q) und/oder der Normalen (N12) der Aufliegerfläche (12), unverschieblich zu der Lagerung, insbesondere dem Lagerbock (30), ist.

12. Nutzfahrzeug umfassend ein Kupplungssystem (1) gemäß einem der vorhergehenden Ansprüche.

## Claims

1. Coupling system (1) for a towing vehicle, comprising a plurality of sensors (50), and a fifth wheel assembly,
wherein the fifth wheel assembly comprises a fifth wheel plate (10) and at least one bearing, which is in particular a bearing block (30),
wherein the fifth wheel plate (10) has a semi-trailer surface (12) and an entry opening (14),
wherein the semi-trailer surface (12) has an outwardly pointing normal (N12),
wherein the entry opening (14) extends in an entry direction (E),
wherein the fifth wheel plate (10) is pivotally mounted about a transverse axis (Q) relative to the fifth wheel mounting,
wherein the bearing has a contact surface (32),
wherein the contact surface (32) lies in a stand-up plane (A),
wherein the plurality of sensors (50) indirectly and/or directly detect and/or determine a pitch angle about the transverse axis (Q) in a non-contact manner, and
wherein at least one of the plurality of sensors (50) is arranged in the immediate vicinity of the fifth wheel plate (10),
**characterized in that** at least one sensor (50) determines a distance of the semi-trailer surface (12) to the stand-up plane (A) in the direction of a normal (NA) of the stand-up plane.

2. Coupling system (1) according to claim 1,
wherein at least one sensor (50) is arranged and/or fastened on the bearing, in particular on the bearing block (30).

3. Coupling system (1) according to any one of the preceding claims,
wherein at least one sensor (50) is arranged and/or attached to the fifth wheel plate (10).

4. Coupling system (1) according to any one of the preceding claims,
wherein at least one sensor (50) is arranged on the transverse axis (Q), and/or
wherein at least one sensor (50) is arranged such that it is intersected by the transverse axis (Q),
wherein the sensor (50) is in particular an angle sensor.

5. Coupling system (1) according to any one of the preceding claims,
wherein at least one sensor (50) is an inductive and/or capacitive sensor (50).

6. Coupling system (1) according to any one of the preceding claims,
wherein all sensors (50) of the pitch angle measuring system are interchangeable with each other.

7. Coupling system (1) according to any one of the preceding claims,
wherein at least one sensor (50) forms a measuring system with a pole wheel,
wherein the pole wheel is rotationally rigid about the transverse axis (Q) relative to the fifth wheel coupling plate (10) and/or relative to the bearing, in particular relative to the bearing block (30).

8. Coupling system (1) according to any one of the preceding claims,
wherein at least two sensors (50) determine a distance of the semi-trailer surface (12) to the stand-up plane (A) in the direction of a normal (NA) of the stand-up plane,
wherein one sensor (50) preferably is arranged in front of the transverse axis (Q) in the entry direction (E) and the other sensor (50) is arranged behind the transverse axis (Q) in the entry direction (E).

9. Coupling system according to any one of the preceding claims,
wherein the at least two sensors (50) have the same distance to the transverse axis (Q) in the direction of the entry direction (E).

10. Coupling system according to any one of the preceding claims,
wherein a sensor (50) determines a distance of the semi-trailer surface (12) to the stand-up plane (A) in the direction of the normal (NA) of the standing plane,
wherein the sensor (50) for this purpose interacts metrologically with a measuring surface (16) of the fifth wheel coupling plate (10),
wherein the measuring surface (16) is formed opposite the semi-trailer surface (12).

11. Coupling system according to any one of the preceding claims,
wherein the fifth wheel plate (10) is non-displaceable relative to the bearing, in particular the bearing block (30), in particular in the direction of the normal (NA) of the support plane and/or the transverse direction (Q) and/or the normal (N12) of the semi-trailer surface (12).

12. Commercial vehicle comprising a coupling system (1) according to one of the preceding claims.

## Revendications

1. Système d'attelage (1) pour un véhicule tracteur, comprenant une pluralité de capteurs (50) et un ensemble de sellette d'attelage,
dans lequel
l'ensemble de sellette d'attelage comprend un plateau de sellette d'attelage (10) et au moins un élément formant palier qui comprend en particulier un support de palier (30),
le plateau de sellette d'attelage (10) comprend une surface d'appui de remorque (12) et une ouverture d'introduction (14),
la surface d'appui de remorque (12) présente une normale (N12) dirigée vers l'extérieur,
l'ouverture d'introduction (14) s'étend dans une direction d'introduction (E), le plateau de sellette d'attelage (10) est monté de manière à pouvoir pivoter par rapport à l'élément formant palier autour d'un axe transversal (Q),
l'élément formant palier présente une surface de repos (32),
la surface de repos (32) se trouve dans un plan de repos (A),
la pluralité de capteurs (50) détectent et/ou déterminent sans contact physique directement et/ou indirectement un angle de tangage autour de l'axe transversal (Q), et
l'un au moins parmi la pluralité de capteurs (50) est disposé à proximité immédiate du plateau de sellette d'attelage (10),
**caractérisé en ce que**
au moins un capteur (50) détermine une distance de la surface d'appui de remorque (12) par rapport au plan de repos (A) dans la direction d'une normale (NA) au plan de repos.

2. Système d'attelage (1) selon la revendication 1,
dans lequel au moins un capteur (50) est disposé et/ou fixé au niveau de et/ou sur l'élément formant palier, en particulier sur le support de palier (30).

3. Système d'attelage (1) selon l'une des revendications précédentes,
dans lequel au moins un capteur (50) est disposé et/ou fixé au niveau du plateau de sellette d'attelage (10).

4. Système d'attelage (1) selon l'une des revendications précédentes,
dans lequel au moins un capteur (50) est disposé sur l'axe transversal (Q), et/ou
au moins un capteur (50) est disposé de manière à être coupé par l'axe transversal (Q),
le capteur (50) est en particulier un capteur d'angle.

5. Système d'attelage (1) selon l'une des revendications précédentes,
dans lequel au moins un capteur (50) est un capteur inductif et/ou capacitif (50).

6. Système d'attelage (1) selon l'une des revendications précédentes,
dans lequel tous les capteurs (50) du système de mesure de l'angle de tangage sont interchangeables entre eux.

7. Système d'attelage (1) selon l'une des revendications précédentes,
dans lequel au moins un capteur (50) constitue un système de mesure avec une roue polaire,
la roue polaire est fixe en rotation autour de l'axe transversal (Q) par rapport au plateau de sellette d'attelage (10) et/ou par rapport à l'élément formant palier, en particulier par rapport au support de palier (30).

8. Système d'attelage (1) selon l'une des revendications précédentes,
dans lequel au moins deux capteurs (50) déterminent une distance de la surface d'appui de remorque (12) par rapport au plan de repos (A) dans la direction d'une normale (NA) au plan de repos,
de préférence, dans la direction d'introduction (E), un capteur (50) est disposé devant l'axe transversal (Q) et l'autre capteur (50) est disposé derrière celui-ci.

9. Système d'attelage (1) selon l'une des revendications précédentes,
dans lequel lesdits au moins deux capteurs (50) présentent la même distance par rapport à l'axe transversal (Q) dans la direction d'introduction (E).

10. Système d'attelage selon l'une des revendications précédentes,
dans lequel un capteur (50) détermine une distance de la surface d'appui de remorque (12) par rapport au plan de repos (A) dans la direction de la normale (NA) au plan de repos,
à cet effet, le capteur (50) interagit par voie métrologique avec une surface de mesure (16) du plateau de sellette d'attelage (10),
la surface de mesure (16) est réalisée à l'opposé de la surface d'appui de remorque (12).

11. Système d'attelage selon l'une des revendications précédentes,
dans lequel le plateau de sellette d'attelage (10) est immobile en translation par rapport à l'élément formant palier, en particulier par rapport au support de palier (30), en particulier dans la direction de la normale (NA) au plan de repos et/ou de la direction transversale (Q) et/ou de la normale (N12) à la surface d'appui de remorque (12).

12. Véhicule utilitaire comprenant un système d'attelage (1) selon l'une des revendications précédentes.
